(19) Europäisches Patentamt
European Patent Office
Office européen des brevets

(11) Publication number: **0 346 150**
**A2**

(12) **EUROPEAN PATENT APPLICATION**

(21) Application number: 89305876.8

(22) Date of filing: 09.06.89

(51) Int. Cl.4: C 08 L 23/12
C 08 L 51/00, C 08 L 77/00,
C 08 L 21/00, C 08 K 9/04

(30) Priority: 09.06.88 JP 140574/88

(43) Date of publication of application:
13.12.89 Bulletin 89/50

(84) Designated Contracting States:
BE DE FR GB IT NL SE

(71) Applicant: TONEN SEKIYUKAGAKU K.K.
1-1, Tsukiji, 4-Chome
Chuo-Ku Tokyo 104 (JP)

(72) Inventor: Sakuma, Masato
17-12 Harigaya 2-chome
Urawa-shi Saitama-ken (JP)

Kitano, Kissho
1-G-1103, Ogura 1-chome Saiwai-ku
Kawasaki-shi Kanagawa-ken (JP)

Fujita, Yuji
4-3-321, Nishitsutugaoka 1-chome Ooi-machi
Iruma-gun Saitama-ken (JP)

Sakaizawa, Masao
20-1-131, Hirato 1-chome Totsuka-ku
Yokohama-shi Kanagawa-ken (JP)

Yagi, Yukihiko
16-24, Okamura 4-chome Isogo-ku
Yokohama-shi Kanagawa-ken (JP)

(74) Representative: Dew, Melvyn John et al
Exxon Chemical Limited Exxon Chemical Technology
Centre P.O. Box 1
Abingdon Oxfordshire, OX13 6BB (GB)

(54) **Thermoplastic resin composition.**

(57) The present invention relates to a thermoplastic resin composition comprising (a) modified PP 1 - 90 wt. parts, (b) polyamide 1 - 90 wt. parts, (c) modified rubber 1 - 50 wt. parts/100 parts of (a) + (b), (d) filler 0.5 - 50 wt. parts/100 parts of (a) + (b) + (c), and (e) titanate-type coupling agent 0.5 - 20 wt.%/filler (d).

EP 0 346 150 A2

## Description

### Thermoplastic Resin Composition

The present invention relates to a thermoplastic resin composition which is especially useful as an engineering plastics. More particularly, it is concerned with an improvement achieved by incorporating a filler into a matrix composed of modified polypropylene, polyamide, and modified rubber.

A technique used to improve the heat resistance and stiffness of a matrix composed of modified polypropylene, polyamide, and modified rubber is the incorporation of a filler into the matrix. (See Japanese Patent Laid-open No. 53550/1985.)

In fact, this technique leads to a great decrease in impact resistance and ductility contrary to an increase in stiffness because fillers are poor in affinity for resin components in the matrix. Moreover, this technique produces its sufficient reinforcing effect (improvement in stiffness and heat resistance) only by the incorporation of a large amount of filler, which deteriorates the appearance and surface gloss of the molded articles such as automotive parts and household electric appliances.

The present invention is intended to achieve the reinforcement (improvement in stiffness, mechanical strength, and heat resistance) effectively by the incorporation of a filler without deteriorating impact strength and surface appearance. Accordingly, it is an object of the present invention to provide a thermoplastic resin composition which exhibits improved stiffness, mechanical strength, and heat resistance without sacrificing impact strength and surface appearance (especially surface gloss).

The gist of the present invention resides in a thermoplastic resin composition which comprises:

(a) 1-90 parts by weight of modified polypropylene partly or entirely modified with an unsaturated carboxylic acid or a derivative thereof;

(b) 1-90 parts by weight of polyamide;

(c) 1-50 parts by weight of modified rubber partly or entirely modified with an unsaturated carboxylic acid or a derivative thereof for 100 parts by weight of the total amount of said components (a) and (b);

(d) 0.5-50 parts by weight of a filler for 100 parts by weight of the total amount of said components (a), (b), and (c); and

(e) a titanate coupling agent in an amount of 0.5-20 wt% of said filler (d).

The modified polypropylene [component (a)] used in the present invention is an acid-modified propylene polymer. The base propylene polymer for acid modification includes propylene homopolymers and propylene-a-olefin copolymers. The α-olefin includes, for example, ethylene and 1-butene. The copolymers may be either block copolymers or random copolymers.

The modified polypropylene is formed by modifying the above-mentioned base material partly or entirely with an unsaturated carboxylic acid or a derivative thereof. The ratio of modification should preferably be 0.01-5 wt%.

With the ratio of modification lower than 0.01 wt%, the thermoplastic resin composition of the present invention does not afford molded articles which have sufficient mechanical strength (such as tensile strength). On the other hand, with the ratio of modification higher than 5 wt%, the thermoplastic resin composition is not improved in impact strength.

This modified polypropylene can be obtained by melt-mixing 100 parts by weight of base polypropylene, 0.05-5 parts by weight of an unsaturated carboxylic acid or a derivative thereof, and 0.05-5 parts by weight of an organic peroxide.

Examples of the unsaturated carboxylic acid include maleic acid, crotonic acid, end-cis-bicyclo (2.2.1) hept-5-ene-2,3-dicarboxylic acid, fumaric acid, acrylic acid, and isocrotonic acid. Examples of the derivative of the unsaturated carboxylic acid include acid anhydrides (such as maleic anhydride), acid halides, amides, imides, and esters.

Examples of the organic peroxide include benzoyl peroxide, dichlorobenzoyl peroxide, dicumyl peroxide, and lauroyl peroxide. The organic peroxide may be replaced by a radical initiator used for the acid modification. Examples of the radical initiator include azobisisobutyronitrile and other azo compounds.

The modified polypropylene [component (a)] used in the present invention may be constituted from a single species of the above-mentioned modified polypropylene or a mixture composed of a modified propylene polymer and an unmodified propylene polymer. The mixture should contain the unsaturated acid in an amount specified above.

The polyamide [component (b)] used in the present invention includes, for example, polyamides obtained by the polycondensation of a diamine and a dicarboxylic acid, polyamides obtained by the condensation of a polyamide and an aminocarboxylic acid, and polyamides obtained by the ring opening of a lactam. They may be a copolymer or a mixture of two or more polyamides. Examples of the polyamide (nylon) [component (b)] include nylon-6, nylon-9, nylon-11, nylon-12, nylon-66, nylon-610, nylon-612, nylon-46, and aromatic nylon.

The modified rubber [component (c)] used in the present invention is one which is obtained by modifying a base rubber material with an unsaturated carboxylic acid or a derivative thereof in the same manner as used for the preparation of the above-mentioned modified polypropylene.

The modification may be accomplished by using the above-mentioned unsaturated carboxylic acid or a derivative thereof as a graft monomer. The modification may also be accomplished by the aid of the above-mentioned radical initiator (organic peroxide).

The rubber base material for modification that can be used in the present invention is a homopolymer or copolymer of α-olefins having two or more carbon atoms. Examples of the α-olefin include ethylene, propylene, 1-butene, 1-hexene, 4-methylpentene, and 1-decene.

The rubber base material for modification may also include, in addition to bipolymers of ethylene and the above-exemplified α-olefin, terpolymers of ethylene, α-olefin, and non-conjugated diene. Examples of the non-conjugated diene include 1,4-hexadiene, dicyclopentadiene, and 5-ethylidene-2-norbornene. The rubber base material for modification may also include rubbers obtained from an aromatic vinyl monomer and a diene.

The modified rubber [component (c)] may be derived from ethylene propylene rubber (EPR), ethylene-1-butene rubber (EBR), EPDM (a terpolymer composed of an ethylene-propylene rubber and a third component such as dicyclopentadiene and ethylidenenorbornene), hydrogenated products of styrene-butadiene block copolymer or triblock copolymer, acrylic rubber, polyisobutylene, epichlorohydrin rubber, polyamide elastomer, and polyester rubber.

The ratio of modification of the modified rubber [component (c)] is preferably from 0.01-2.0 wt%.

With the ratio of modification lower than 0.01 wt%, the modified rubber is poor in compatibility for the polyamide and the thermoplastic resin composition of the present invention has a low impact resistance. On the other hand, with the ratio of modification higher than 2.0 wt%, the resin composition of the present invention yields molded articles having a poor surface appearance and is poor in flowability in molding.

The modified rubber [component (c)] used in the present invention may be constituted from a single species of the above-mentioned modified rubber or a mixture composed of a modified rubber and an unmodified rubber. The mixture should contain the unsaturated acid in an amount specified above.

The filler [component (d)] used in the present invention includes, for example, silicates (such as talc, clay, bentonite and attapulgite), carbonates (such as calciun carbonate and magnesium carbonate), sulfates (such as barium sulfate), mica, potassium titanate whisker, glass fiber, and carbon fiber, which are in general use in the field relating to the present invention.

The titanate coupling agent [component (e)] used in the present invention includes those' which are represented by the formulas shown below.

(i)

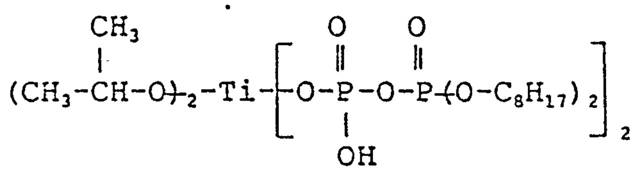

(ii)

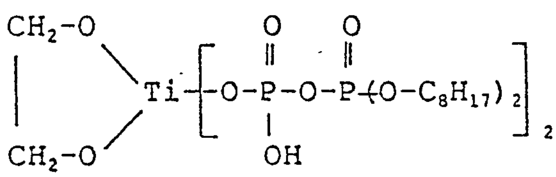

(iii)

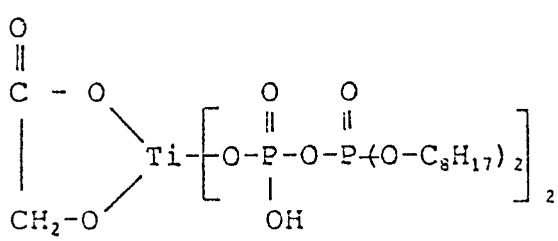

(iv)

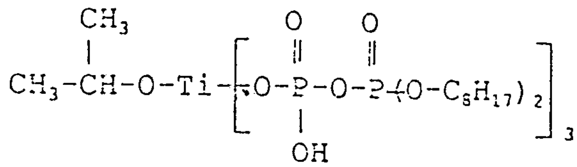

(v)

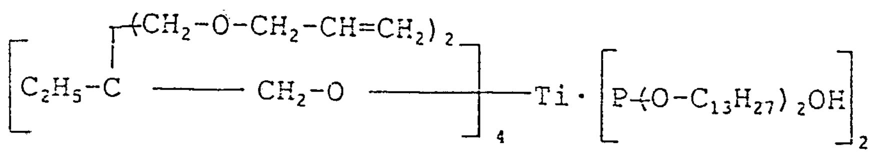

(vi)

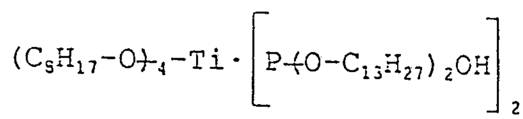

(vii)

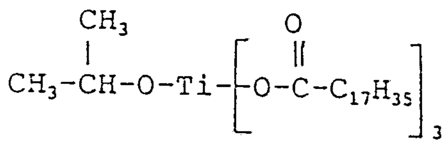

(viii)

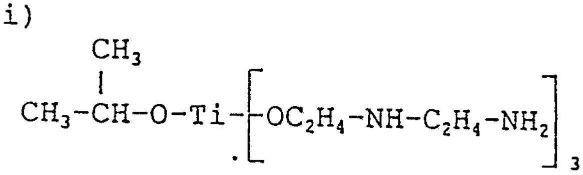

As the result of their extensive studies, the present inventors found that the thermoplastic resin composition of the present invention yields molded articles which exhibit greatly improved stiffness, strength, heat resistance, and surface gloss with almost no decrease in impact strength when it is incorporated with a slight amount of one of the above-listed titanate coupling agents. Better results are obtained with the phosphate-titanate coupling agents (i) to (iv) than with the other titanate coupling agents (v) to (viii) having no acid phosphate group. The desired results are not obtained with silane coupling agents.

The thermoplastic resin composition of the present is composed of:

(a) 1-90 parts by weight of modified polypropylene,

(b) 1-90 parts by weight of polyamide,

(c) 1-50 parts by weight of modified rubber for 100 parts by weight of the total amount of components (a) and (b),

(d) 0.5-50 parts by weight of filler for 100 parts by weight of the total amount of components (a), (b), and (c), and

(e) a titanate coupling agent, especially phosphate-titanate coupling agent, in an amount of 0.5-20 wt% of the amount of the filler (d).

In the total amount of the modified polypropylene [component (a)] and the polyamide [component (b)], the amount of the former should be 1 to 90 parts by weight. With an amount less than 1 part by weight, it does not improve the resin composition in water resistance and moldability. With an amount more than 90 parts by weight, it does not improve the resin composition in heat resistance and stiffness.

The amount of the modified rubber [component (c)] should be 1 to 50 parts by weight. With an amount less than 1 part by weight, it does not improve the resin composition in impact resistance. With an amount more than 90 parts by weight, it does not improve the resin composition in surface appearance.

The amount of the filler [component (d)] should be 0.5 to 50 parts by weight. With an excessively small amount, it does not improve the resin composition in heat resistance and stiffness. With an excessively large amount, it deteriorates the impact resistance and moldability of the resin composition and causes the resin composition to yield molded articles having no surface gloss. According to the present invention, even a small amount of filler produces its effect of improving stiffness, mechanical strength, heat resistance, and surface gloss when it is used in combination with a small amount of the titanate coupling agent. A preferred amount of the filler is 0.5-15 parts by weight.

The amount of the titanate coupling agent [component (e)] should be 0.5-20 wt% of the amount of the filler. The titanate coupling agent incorporated into the matrix composed of (a) modified polypropylene, (b)

polyamide, (c) modified rubber, and (d) filler improves the resulting resin composition in stiffness, mechanical strength, heat resistance, and surface gloss (appearance) with almost no decrease in impact strength.

The thermoplastic resin composition of the present invention can be obtained by adding the titanate coupling agent to the above-mentioned matrix using a mixer or blender and then melt-mixing the resulting mixture using a Banbury mixer or the like.

The thermoplastic resin composition of the present invention may be incorporated with a variety of additives such as slip agent, antistatic agent, and flame retardant.

According to the present invention, the thermoplastic resin composition is incorporated with a titanate coupling agent, especially phosphate-titanate coupling agent such as one represented by the formula (i) above. It contains an alkyl group such as $-C_8H_{17}$ and a strongly acidic pyrophosphate group such as

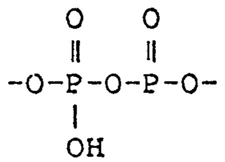

Therefore, it is considered that the coupling agent acts on not only the filler [component (d)] but also the modified polypropylene [component (a)], and the polyamide [component (b)], which has a basic group. This action enhances the filler-to-resin and resin-to-resin interfacial bonding (especially in the matrix containing a polyamide), which leads to the effective reinforcement. By contrast, the amino silane, which has no acidic group, is not so effective as the phosphate-titanate (i) in the above-mentioned matrix.

Having good heat resistance, stiffness, impact strength, ductility, and surface gloss, the thermoplastic resin composition of the present invention will find used as an engineering plastic molding material for automotive parts and household electric appliances which are required to have a good external appearance.

*Examples*

The invention will be explained in more detail with reference to the following examples. The resin compositions obtained in the examples were tested for properties according to the following test methods.

Tensile strength: JIS K-7113
Flexural modulus: JIS K-7203 (23°C)
Izod impact strength: JIS K-7110, with notch, (23°C)
Heat distortion temperature: JIS K-7207, with a load of 4.6 kg/cm$^2$
Gloss: JIS K-7110

Example 1

The following components were dry-blended using a tumbler blender.

(1) 50 parts by weight of nylon-6

(2) 50 parts by weight of maleic anhydride-modified polypropylene (with a modification ratio of 0.5 wt % prepared by melt-mixing 100 parts by weight of propylene homopolymer, 1.0 part by weight of maleic anhydride, and 0.05 parts by weight of 2,5-dimethyl-2,5-di (t-butyl peroxy) hexene-3. (This component will be referred to as PP + CMP hereinafter.)

(3) 20 parts by weight of maleic anhydride-modified EPR (with a modification ratio of 0.3 wt%) prepared by melt-mixing 100 parts by weight of EPR, 0.3 part by weight of maleic anhydride, and 0.05 parts by weight of 2,5 -dimethyl-2,5-di (t-butyl peroxy) hexene-3 (for 100 parts by weight of total amount of the nylon-6 and modified polypropylene).

(4) 2 parts by weight of talc.

(5) phosphate-titanate coupling agent (i) in an amount of 2 wt% of the talc.

The resulting blend was pelletized by using a 45-mm extruder at 250°C. After drying, the pellets were made into specimens by injection molding at 270°C, and the specimens were tested for physical properties. The results are shown in Table 1.

Example 2

The same procedure as in Example 1 was repeated, except that the amount of the nylon-6 was changed to 70 parts by weight, the amount of the maleic anhydride-modified polypropylene was changed to 30 parts by weight, the amount of the modified EPR was changed to 10 parts by weight, and the amount of the talc was changed to 1 part by weight. The results are shown in Table 1.

Example 3

The same procedure as in Example 2 was repeated, except that the amount of the modified EPR was changed to 20 parts by weight and the amount of the talc was changed to 2 parts by weight. The results are shown in Table 1.

Example 4

The same procedure as in Example 2 was repeated, except that the modified polypropylene was replaced by one which is prepared from 100 parts by weight of propylene-ethylene block copolymer, and the amount of the talc was changed to 10 parts by weight. The results are shown in Table 1.

Example 5

The same procedure as in Example 4 was repeated, except that the talc was replaced by mica. The results are shown in Table 1.

Example 6

The same procedure as in Example 5 was repeated, except that the mica was replaced by potassium titanate whisker. The results are shown in Table 1.

Comparative Example 1

The same procedure as in Example 1 was repeated, except that the talc and phosphate-titanate coupling agent were not added. The results are shown in Table 1

Comparative Example 2

The same procedure as in Example 2 was repeated, except that the talc and phosphate-titanate coupling agent were not added. The results are shown in Table 1.

Comparative Example 3

The same procedure as in Example 2 was repeated, except that the talc was not added. The results are shown in Table 1.

Comparative Example 4

The same procedure as in Comparative Example 2 was repeated, except that the amount of the modified EPR was changed to 20 parts by weight. The results are shown in Table 1.

Comparative Example 5

The same procedure as in Example 4 was repeated, except that the phosphate-titanate coupling agent was not used. The results are shown in Table 1.

Table 1

| | Example No. | | | | | | Comparative Example No. | | | | |
|---|---|---|---|---|---|---|---|---|---|---|---|
| Components | 1 | 2 | 3 | 4 | 5 | 6 | 1 | 2 | 3 | 4 | 5 |
| Nylon | 50 | 70 | 70 | 70 | 70 | 70 | 50 | 70 | 70 | 70 | 70 |
| PP + CMP | 50 | 30 | 30 | 30 | 30 | 30 | 50 | 30 | 30 | 30 | 30 |
| Modified EPR | 20 | 10 | 20 | 10 | 10 | 10 | 20 | 10 | 10 | 20 | 10 |
| Filler | talc 2 | talc 1 | talc 2 | talc 10 | mica 10 | whisker 10 | - | - | - | - | talc 10 |
| Coupling agent | 2 | 2 | 2 | 2 | 2 | 2 | - | - | 2 | - | - |
| Tensile strength | 310 | 500 | 430 | 530 | 540 | 550 | 300 | 470 | 470 | 390 | 500 |
| Flexural modulus, 23°C | 13200 | 19700 | 17200 | 24200 | 26000 | 24000 | 11200 | 16600 | 16600 | 13600 | 20200 |
| Izod impact strength, 23°C | 40 | 19 | 45 | 17 | 10 | 17 | 45 | 20 | 19 | 50 | 18 |
| Heat distortion temperature | 121 | 132 | 128 | 151 | 160 | 158 | 103 | 112 | 114 | 108 | 133 |
| Gloss | 75 | 88 | 89 | | 79 | 88 | 70 | 88 | 88 | 89 | 70 |

It is noted from Table 1 that the resin composition of the present invention has improved tensile strength, flexural modulus, heat distortion temperature, and surface gloss with almost no decrease in Izod impaot strength. This is particularly remarkable when Example 4 is compared with Comparative Example 5. The filler exhibits its effect when added in an amount smaller than 10 parts by weight.

The present invention provides a resin composition composed of a matrix of modified polypropylene, polyamide, and modified rubber and a filler, said resin composition being reinforced effectively with the filler without any adverse effect on impact strength and surface appearance.

## Claims

1. A thermoplastic resin composition which comprises:

(a) 1-90 parts by weight of modified polypropylene partly or entirely modified with an unsaturated carboxylic acid or a derivative thereof;

(b) 1-90 parts by weight of polyamide;

(c) 1-50 parts by weight of modified rubber partly or entirely modified with an unsaturated carboxylic acid or a derivative thereof for 100 parts by weight of the total amount of said components (a) and (b);

(d) 0. 5-50 parts by weight of a filler for 100 parts by weight of the total amount of said components (a), (b), and (c); and

(e) a titanate coupling agent in an amount of 0.5-20 wt% of said filler (d).

2. A thermoplastic resin composition as claimed in Claim 1, wherein said titanate coupling agent is a phosphate-titanate coupling agent.

3 A thermoplastic resin composition as claimed in claim 2 wherein the coupling agent is one or more of

(i)

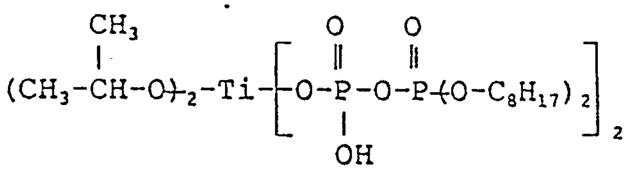

(ii)

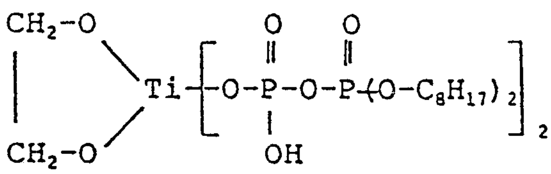

(iii)

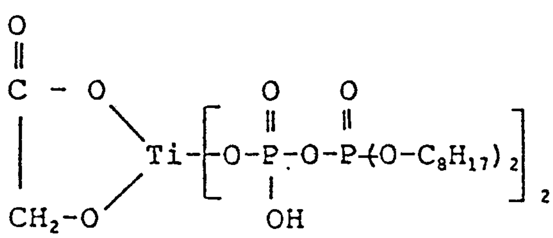

(iv)

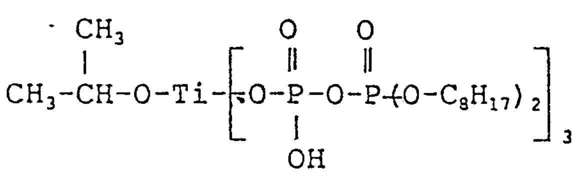

4 A thermoplastic resin composition as claimed in any preceding claim wherein the polypropylene is modified with from 0.1 - 5 wt % of the acid or derivative.

5 A thermoplastic resin composition as claimed in any preceding claim wherein the modified rubber is derived from EPR, EBR or EPDM.

6 A thermoplastic resin composition as claimed in any preceding claim wherein the rubber is modified with from 0.01 - 2.0 wt % of the acid or derivative.

7 A thermoplastic resin composition as claimed in any preceding claim wherein the polypropylene and/or the rubber is modified with maleic acid, crotonic acid, end-cis-bicyclo (2.2.1) hept-5-ene-2,3-dicarboxylic acid, fumaric acid, acrylic acid or isocrotonic acid or derivatives thereof, especially maleic anhydride.

8 A thermoplastic resin composition as claimed in any preceding claim which comprises from 0.5 - 15 parts by weight of filler as component (d).

9 A thermoplastic resin composition as claimed in any preceding claim wherein the filler is selected from one or more of silicates, carbonates, sulphates and glass fibres.

10 The use of a thermoplastic resin as claimed in any preceding claim as an engineering plastic molding material, especially for automotive parts and household electrical appliances.